# EUROPEAN PATENT APPLICATION

(11) **EP 2 821 220 A1**
(43) Date of publication of application: **07.01.2015**
(21) Application number: 13175418.6
(22) Date of filing: 05.07.2013
(51) Int. Cl.: B31D 3/02, B29D 99/00

(54) **Composite honeycomb**

(71) Applicant: EIG Equipement Industriel SA, 1305 Penthalaz (CH)
(72) Inventor: Mordasini, François, 1009 Pully (CH); Gautier, Gérard, 1169 Yens (CH)
(74) Representative: Ganguillet, Cyril

(57) **Abstract**

The invention relates to a composite honeycomb (1) comprising a plurality of contiguous cells (2) each of substantially hexagonal cross-section, each cell (2) comprising a lower part (50) and an upper part (60), said lower part (50) comprising three lower cell walls, namely a lower horizontal cell wall (51) and two lower inclined cell walls (52), and said upper part (60) comprising three upper cell walls, namely an upper horizontal cell wall (61) and two upper inclined cell walls (62), characterized in that each of said cell walls (51,52,61,62) are substantially of the same thickness, in that each lower part (50) comprises fiber-reinforced material including a plurality of structural fibers (40) arranged to provide a continuity of fiber-reinforced material between said lower horizontal cell wall (51) and said two lower inclined cell walls (52) of said lower part (50) and in that each upper part (60) comprises fiber-reinforced material including a plurality of structural fibers (40) arranged to provide a continuity of fiber-reinforced material between said upper horizontal cell wall (61) and said two upper inclined cell walls (62) of said upper part (60), so that stress and strain applied to said composite honeycomb (1) can be transmitted from said horizontal cell walls (51,61) to respective inclined cell walls (52,62).

## Description

### Field of the invention

The present invention relates to a composite honeycomb. In particular, the composite honeycomb, object of the invention, comprises a plurality of cells each of substantially hexagonal cross-section and wherein each wall of said cells are substantially of the same thickness.

### Background of the invention

Sandwich-structures comprising skins and a honeycomb core are well known and widely used in many applications where high stiffness and lightweight material are required. In particular, the combined features of stiffness and lightweight make the sandwich-structures comprising skins and a honeycomb core particularly well-suited for applications such as motor racing vehicles, boats, helicopter, train, aircrafts and spacecrafts.

Traditionally, honeycombs are made from aluminum because of its low-weight properties. Nevertheless, the use of aluminum also results in problems: Firstly, the use of aluminum leads to an easily damaged and easily crumpled structure when subjected to handling and manufacturing. Secondly, a sandwich-structure comprising a honeycomb core made of aluminum is subjected to warping. Indeed, the skins of a sandwich-structure are traditionally made of composite material, in particular made of carbon fiber-reinforced material, thus resulting in a different coefficient of expansion between the honeycomb core and the skins of the sandwich-structure. Such risk of warping cannot be tolerated in applications enduring significant temperature differences such as motor racing vehicles, boats, helicopter, train, aircrafts and spacecrafts. Thirdly, aluminum is subject to galvanic corrosion. Therefore, a sandwich-structure comprising a honeycomb core made of aluminum is not reliable over time.

For avoiding the above-mentioned aluminum drawbacks and to take benefit from their mechanical properties, composite materials, in particular fiber-reinforced material, are known to be used for manufacturing composite honeycombs. Nevertheless, the walls of each cell of traditional composite honeycomb are not of the same thickness. The non uniformity in walls thickness makes the traditional composite honeycomb anisotropic, meaning different mechanical properties in different directions. Said mechanical properties are in particular deformability properties and expansion properties. Indeed, in traditional composite honeycomb, two walls of each hexagonal cell comprise parts of two sheets brought into contact while the other four walls comprise part of a single sheet. Therefore, said two walls are of double-thickness while said other four walls are of single-thickness. Indeed, the traditional method of producing said traditional composite honeycomb, commonly referred to as a corrugation process (see US patent number 5,030,305), is based on the assembly of corrugated composite sheets, said sheets being corrugated in such a manner that they define the outline of half of adjacent hexagonal honeycomb cells. Once corrugated, the sheets are stacked, aligned and bonded to form a composite honeycomb. By the use of said traditional method, two walls of each hexagonal cell are made of parts of two corrugated sheets brought into contact the other four walls are made of a part of a single corrugated sheet. Therefore, said two walls are of double-thickness while said other four walls are of single-thickness. At this stage, one should point out that the terms "double-thickness" and "single-thickness" are relative terms, not absolute, since single corrugated sheet can comprise a single or a plurality of plies made of fiber-reinforced material. For example and in the case that a honeycomb would be produced by stacking corrugated sheets comprising each two plies, said "double-thickness" term refers to walls of double-thickness comprising each parts of two corrugated sheets and therefore four plies while said "single-thickness" term refers to walls of single-thickness comprising each a part of one corrugated sheet and therefore two plies. Such anisotropic composite honeycomb cannot be tolerated in applications where mechanical properties have to be uniform in all directions in the plane of the honeycomb, meaning in the plane perpendicular to the thickness direction of the honeycomb. Moreover, anisotropic properties can lead to the warping of the composite honeycomb when said composite honeycomb is subjected to temperature differences since the thermal expansion behavior of each honeycomb cell wall is not uniform. Furthermore, said walls of double-thickness lead to over-weight, each hexagonal cell being 33% heavier than what it would be if all hexagonal cell walls are of single-thickness. Repeating the fact that sandwich-structures comprising skins and a honeycomb core are widely used in applications where high stiffness and lightweight material are required, such over-weight can be of significant drawbacks, in particular in applications such as motor racing vehicles, boats, helicopter, train, aircrafts and spacecrafts.

Besides said traditional method of producing traditional composite honeycomb, an other method has been developed for producing a quasi-isotropic composite honeycomb. Such method (see publication number EP0761421A2) is based on stacking prismatic shape bodies of hexagonal cross-section wherein composite sheets are placed on three sides of said prismatic shape bodies, the width of said sheets being equal to the width of the sides. The bodies are then stacked on each other so that between parallel surfaces of adjacent body only one sheet is positioned. The ends of adjacent sheets are then connected together. Quite obviously, since the ends of adjacent sheets are bonded together, the reliability of such a composite honeycomb is lower than in the case that sides of adjacent sheets are bonded together. Indeed, since the stress and strain are transmitted from one honeycomb cell to the other through a particular point, not through a surface, the adjacent sheets are likely to be disconnected. Moreover, such composite honeycomb does not provide continuities of fiber-reinforced material between cell walls. Therefore, the stress and strain cannot be transmitted from one cell wall to the other through fiber-reinforced material. Adjacent sheets forming adjacent cell walls are here again likely to be disconnected when stress and strain are applied to the composite honeycomb.

Therefore, there is a need for a composite honeycomb fulfilling, respectively avoiding, the above-mentioned requirements and drawbacks. The aim of the present invention is thus to provide a solution to these problems.

### Summary of the invention

To this end, in line with the invention, a composite honeycomb according to claim 1 is proposed. Other possible configurations of the invention are defined in claims 2 to 18.

The invention thus configured provides a composite honeycomb comprising a plurality of contiguous cells each of substantially hexagonal cross-section wherein each wall of said cells are substantially of the same thickness. By considering that material properties of each cell wall is uniform and by neglecting the non-uniformity in mechanical properties due to the particular geometry of each cell, the uniformity in walls thickness makes the composite honeycomb isotropic, meaning mechanical properties uniform in all directions in the plane of the honeycomb, meaning in the plane perpendicular to the thickness direction of the honeycomb. Moreover and in the case that the honeycomb would be subjected to temperature differences, said uniformity in walls thickness makes the thermal expansion behavior of each honeycomb cell walls uniform so that warping of the honeycomb is avoided. Advantageously, the composite honeycomb may comprise a plurality of contiguous cells each of substantially regular hexagonal cross-section.

Moreover, each cell comprises a lower part and an upper part, the lower, respectively upper, part comprising three lower, respectively upper, cell walls, wherein each lower, respectively upper, part comprises fiber-reinforced material including a plurality of structural fibers arranged to provide a continuity of fiber-reinforced material between the horizontal cell wall and the two inclined cell walls of the lower, respectively upper, part, so that stress and strain applied to the composite honeycomb can be transmitted from the horizontal cell walls to respective inclined cell walls. Since each cell comprises the above-mentioned continuity of fiber-reinforced material between horizontal cell walls and respective inclined cell walls, two continuities of fiber-reinforced material may be provided in each corner of cells of the honeycomb, object of the invention. The composite honeycomb is reliable and provides improved mechanical properties, in particular increase of stress and strain resistance, relative to traditional above-mentioned quasi-isotropic honeycomb which does not provide said continuity of fiber-reinforced material.

Advantageously, each lower part may comprise at least one U-shaped ply comprising a horizontal side and two inclined sides, said U-shaped ply comprising said fiber-reinforced material including a plurality of structural fibers arranged to provide a continuity of fiber-reinforced material between said lower horizontal cell wall and said two lower inclined cell walls of said lower part. Similarly, each upper part may comprise at least one inverted U-shaped ply comprising a horizontal side and two inclined sides, said inverted U-shaped ply comprising said fiber-reinforced material including a plurality of structural fibers arranged to provide a continuity of fiber-reinforced material between said upper horizontal cell wall and said two upper inclined cell walls of said upper part. Therefore, the cell walls of the composite honeycomb may comprise each a portion of U-shaped ply and a portion of an inverted U-shaped ply. Each cell wall of the composite honeycomb is therefore at least of double thickness. Nevertheless, the composite honeycomb objet of the invention is 33% lighter than a honeycomb produced with the help of the above mentioned traditional method. Indeed, in order to produce with the help of the traditional method a composite honeycomb wherein the cell walls comprise each at least two plies, corrugated sheets comprising each two plies would be stacked upon each other. Such traditional method therefore directly implies that two walls of each hexagonal cell are made of parts of two corrugated sheets brought into contact while the other four walls are made of a part of one corrugated sheet. Therefore, said two walls are of double-thickness and comprise four plies while said other four walls are of single-thickness and comprise two plies. A lightweight honeycomb can be of significant advantages in applications such as motor racing vehicles, racing motorcycle, boats, helicopter, train, aircrafts and spacecrafts.

Advantageously, the structural fibers may be arranged to lie essentially in a unidirectional orientation for bearing stress and strain in said orientation. Advantageously, the orientation of the structural fibers of the U-shaped ply may differ from the orientation of the structural fibers of the inverted U-shaped ply so that stress and strain applied to the composite honeycomb in different orientations can be borne. Furthermore, the orientation of the structural fibers of the U-shaped ply may be essentially perpendicular to the orientation of the structural fibers of the inverted U-shaped ply.

Advantageously, the lower part, respectively the upper part, may comprise each at least two fiber-reinforced U-shaped plies, respectively at least two fiber-reinforced inverted U-shaped plies, namely a first ply and a second ply, comprising the structural fibers. In such a case, the structural fibers may be arranged so that the orientation of the structural fibers of the first ply differs from the orientation of the structural fibers of the second ply.

Moreover, the structural fibers may be chosen and arranged so that the thickness of the U-shaped ply, respectively of the inverted U-shaped ply, is comprised between 15 and 100 µm. Advantageously, the diameter of the structural fibers may be comprised between 5 and 11 µm. Moreover, the relative weight of the U-shaped ply, respectively of the inverted U-shaped ply, may be as low as 15 g/m². Lightweight plies directly leads to a lightweight composite honeycomb, which can be, as mentioned above, of significant advantages.

Further objects, features and advantages of the invention will become apparent to a person skilled in the art upon reading the specification and appended figures.

### Brief description of the drawings

The invention will be better understood with the aid of the description of embodiments given by way of example and illustrated by the figures, in which:
- Figure 1A depicts a schematic representation in cross-section of a known traditional method of producing a traditional composite honeycomb;
- Figure 1B is a detailed view according to A of the composite honeycomb of Figure 1A;
- Figure 2 depicts a schematic representation in cross-section of a composite honeycomb, in accordance with the invention;
- Figure 3A, respectively Figure 3B, depicts a schematic representation in cross-section of a U-shaped ply, respectively of an inverted U-shaped ply, comprised in the lower part, respectively in the upper part, of each cell of a composite honeycomb, in accordance with the invention;
- Figure 4A depicts a schematic representation in cross-section of a method, in a first embodiment, of producing a composite honeycomb object of the invention;
- Figure 4B is a detailed view according to B of the composite honeycomb of Figure 4A;
- Figure 5A depicts a schematic representation in cross-section of a method, in a second embodiment, of producing a composite honeycomb object of the invention;
- Figure 5B is a detailed view according to C of the composite honeycomb of Figure 5A;
- Figure 6 depicts a schematic representation in cross-section of a method of producing corrugated sheets;
- Figure 7 depicts a schematic representation in cross-section of a method of forming U-shaped elements and inverted U-shaped elements;
- Figure 8 depicts a schematic representation in perspective of a fiber-reinforced prepreg ply;
- Figure 9 depicts a schematic representation in perspective of a fiber-reinforced U-shaped ply.

### Detailed description of the invention

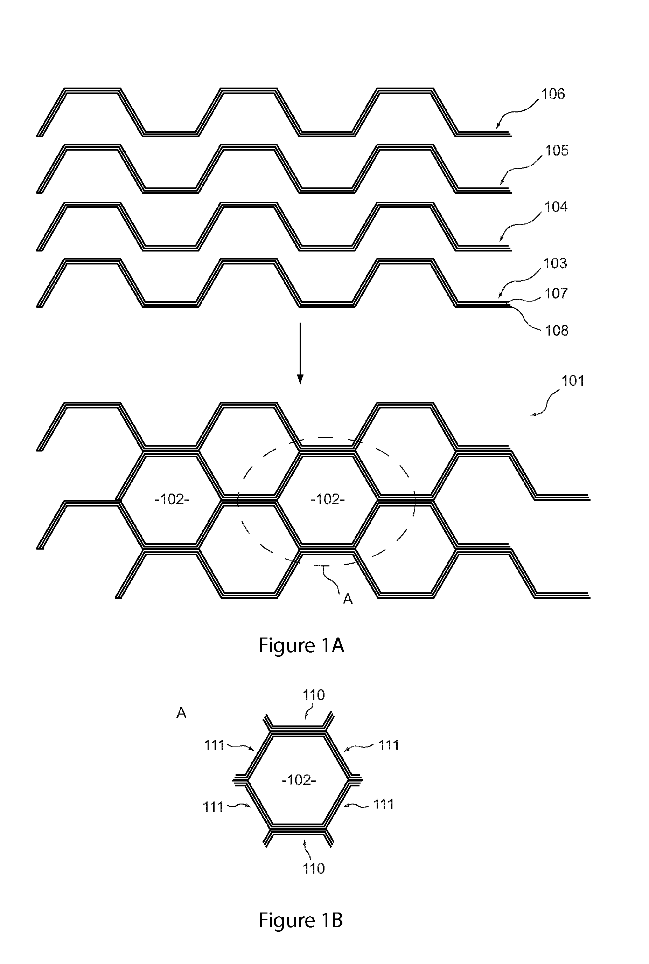

The present invention will now be described more fully hereinafter with reference to the appended Figures 1 to 9.

Figure 1A depicts a schematic representation in cross-section of a known traditional method of producing a composite honeycomb 101 formed of a plurality of regular hexagonal cells 102. Said traditional method is commonly referred to as a corrugation process and is based on the assembly of corrugated composite sheets 103,104,105,106, said sheets being corrugated in such a manner that they define the outline of half of adjacent regular hexagonal honeycomb cells 102. In Figure 1A, the corrugated composite sheets 103,104,105,106 and the honeycomb 101 are shown in cross-section. The corrugated composite sheets 103,104,105,106 are traditionally obtained by passing composite sheets through mated corrugating rollers. Alternatively, corrugated composite sheets can be obtained by pressing composite sheets in a press comprising a pair of mating dies. Nevertheless, said corrugating rollers and said press does not permit to obtain precisely said outline of half of adjacent regular hexagonal honeycomb cells due to the friction between the composite sheet and the rollers or between the composite sheet and the dies. Moreover, because of said friction and because of the low elasticity properties of composite material, composite sheets are likely to be torn when passing through mated corrugating rollers or when being pressed between mating dies. Once corrugated, the composite sheets are stacked upon each other, aligned and bonded to form a composite honeycomb 101. Traditionally, the corrugated sheets 103,104,105,106 comprise each a plurality of plies. In Figure 1A, each corrugated sheet 103,104,105,106 comprises two plies 107',108'. The honeycomb 101 produced by the above-mentioned traditional method is anisotropic since the walls of each honeycomb cell 102 are not of the same thickness. Indeed, in Figure 1B, two walls 110 of each hexagonal cell 102 are made of parts of two corrugated sheets brought into contact and therefore made of four plies while the other four walls 111 are made of a part of a single corrugated sheet and therefore made of two plies. Said two walls 110 are therefore of double-thickness while said other four walls 111 are of single-thickness. Such non-uniformity in walls thickness makes the honeycomb anisotropic, in particular in mechanical properties, in deformability and in expansion, as well as over-weighted, the honeycomb being 33% heavier than what it would be if all hexagonal cell walls are of single-thickness.

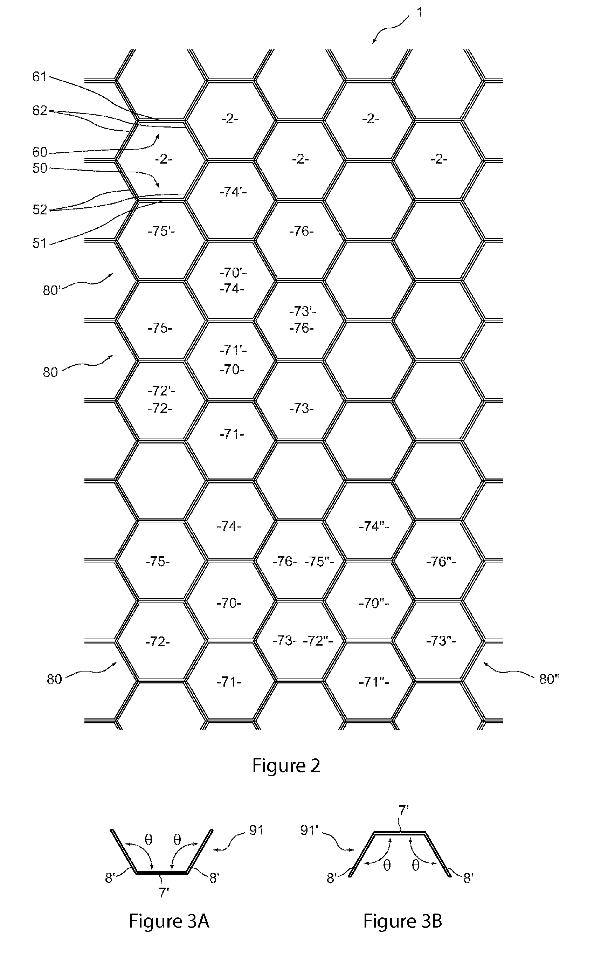

Figure 2 depicts a schematic representation in cross-section of a composite honeycomb 1, in accordance with the invention. The composite honeycomb 1 comprises a plurality of contiguous cells 2 each of substantially hexagonal cross-section. Each cell 2 comprises a lower part 50 and an upper part 60, said lower part 50 comprising three lower cell walls, namely a lower horizontal cell wall 51 and two lower inclined cell walls 52, and said upper part 60 comprising three upper cell walls, namely an upper horizontal cell wall 61 and two upper inclined cell walls 62. Each of said cell walls 51,52,61,62 are substantially of the same thickness. By considering that material properties of each cell wall is uniform and by neglecting the non-uniformity in mechanical properties due to the particular geometry of each cell, the uniformity in walls thickness makes the composite honeycomb isotropic, meaning mechanical properties uniform in all directions in the plane of the honeycomb, meaning in the plane perpendicular to the thickness direction of the honeycomb. In the case that the composite honeycomb would be subjected to temperature differences, the thermal expansion behavior of each honeycomb cell walls is uniform so that warping of the honeycomb is avoided. Moreover, each lower part 50 of each cell 2 comprises fiber-reinforced material including a plurality of structural fibers arranged to provide a continuity of fiber-reinforced material between the lower horizontal cell wall 51 and the two lower inclined cell walls 52 of the lower part 50. Similarly, each upper part 60 comprises fiber-reinforced material including a plurality of structural fibers arranged to provide a continuity of fiber-reinforced material between the upper horizontal cell wall 61 and the two upper inclined cell walls 62 of the upper part 60. Considering the above-mentioned continuities of fiber-reinforced material, stress and strain applied to the composite honeycomb 1 can be transmitted from the horizontal cell walls 51,61 to respective inclined cell walls 52,62. Since each cell 2 comprises the above-mentioned continuity of fiber-reinforced material between horizontal cell walls 51,61 and respective inclined cell walls 52,62, two continuities of fiber-reinforced material may be provided in each corner of cells of the honeycomb, object of the invention. The properties related to the continuity of fiber-reinforced material provide a reliable composite honeycomb with improved mechanical properties, in particular increase of stress and strain resistance.

Advantageously, in Figure 2 the cells 2 of the composite honeycomb 1 may be each of substantially regular hexagonal cross-section, the horizontal cell wall 51,61 and the inclined cell walls 52,62 being substantially of same dimensions and the inclined cell walls 52,62 being inclined at substantially 120° relative to the horizontal cell wall 51,61.

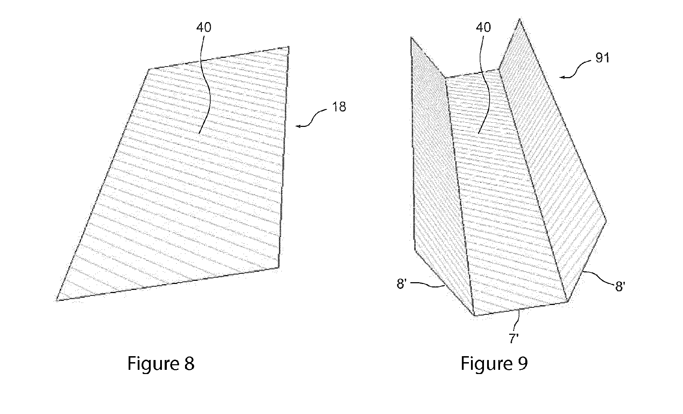

Advantageously, each lower part 50 may comprise at least one U-shaped ply 91 as shown in Figure 3A comprising a horizontal side 7' and two inclined sides 8', the U-shaped ply 91 comprising the fiber-reinforced material including a plurality of structural fibers arranged to provide a continuity of fiber-reinforced material between the lower horizontal cell wall 51 and the two upper inclined cell walls 52 of the lower part 50. For example, Figure 9 depicts a schematic representation of a fiber-reinforced U-shaped ply 91. In Figure 9, the U-shaped ply 91 comprises structural fibers 40 arranged to lie essentially in a unidirectional orientation of about 45° relative to the thickness direction of the composite honeycomb 1. In Figure 9, the continuity of structural fibers 40 between the horizontal side 7' and the two inclined sides 8' of the U-shaped ply 91 is clearly evidenced. Stress and strain can therefore be transmitted from the horizontal side 7' to the inclined sides 8'. Similarly, each upper part 60 may comprise at least one inverted U-shaped ply 91' as shown in Figure 3B comprising the fiber-reinforced material including a plurality of structural fibers 40 arranged to provide a continuity of fiber-reinforced material between the upper horizontal cell wall 61 and the two upper inclined cell walls 62 of the upper part 60. Therefore, the cell walls of the composite honeycomb 1 may comprise each a portion of U-shaped ply 91 and a portion of an inverted U-shaped ply 91'. Each cell wall of the composite honeycomb 1 is therefore at least of double thickness. Nevertheless, the composite honeycomb 1 is 33% lighter than a honeycomb produced with the help of the above mentioned traditional method. Indeed, in order to produce with the help of the traditional method a composite honeycomb wherein the cell walls comprise each at least two plies, corrugated sheets comprising each two plies would be stacked upon each other. Such traditional method therefore directly implies that two walls of each hexagonal cell are made of parts of two corrugated sheets brought into contact while the other four walls are made of a part of one corrugated sheet. Therefore, said two walls are of double-thickness and comprise four plies while said other four walls are of single-thickness and comprise two plies. A lightweight honeycomb can be of significant advantages in applications such as motor racing vehicles, racing motorcycle, boats, helicopter, train, aircrafts and spacecrafts. Advantageously, the inverted U-shaped ply 91' is substantially symmetrical in shape to the U-shaped ply 91.

Advantageously, the structural fibers 40 may be arranged to lie essentially in a unidirectional orientation for bearing stress and strain in that orientation. More advantageously, the orientation of the structural fibers 40 of the U-shaped ply 91 may differ from the orientation of the structural fibers 40 of the inverted U-shaped ply 91' so that stress and strain applied to the composite honeycomb in different orientations can be borne. Furthermore, the structural fibers 40 may be arranged so that the orientation of the structural fibers of the U-shaped ply 91 may be substantially perpendicular to the orientation of the structural fibers 40 of the inverted U-shaped ply 91'. Advantageously, the orientation α of the structural fibers 40 of the U-shaped ply 91 and/or the orientation β of the structural fibers 40 of the inverted U-shaped ply 91' may be chosen among substantially 0°, ±30° ±45° or 90° relative to the thickness direction of the composite honeycomb 1. For example, one can have the following combinations of structural fibers orientations [α, β]= [+30,-30°] or [+45,-45°] or [0°, +30°] or [0°, -30°] or [0°,+45°] or [0°,-45°] or [0°,90°] or [-30°,+45°] or [+30°,-45°]. Others combinations can be found for example by defining in the preceding examples the β values as the α ones and vice versa. Advantageously, the structural fibers 40 may be chosen among carbon, glass, aramid, ceramic, quartz, thermoplastic polyethylene (UHMWPE) and polybenzoxazole (PBO). Advantageously, the structural fibers 40 are chosen so that the thickness of each U-shaped plies 91 and of each inverted U-shaped plies 91' are comprised between 15 and 100 µm. Advantageously, the diameter of the structural fibers 40 may be comprised between 5 and 11 µm. U-shaped plies 91 and inverted U-shaped plies 91' comprising structural fibers 40 of such thickness are considered and defined as thin plies. The relative weight each U-shaped ply 91 and of each inverted U-shaped plies 91' may be as low as 15 g/m². Lightweight plies directly leads to a lightweight composite honeycomb, which can be, as mentioned above, of significant advantages.

Advantageously, each lower part 50 and each upper part 60 may comprise a plurality of fiber-reinforced plies. For example, the lower part 50, respectively the upper part 60, may comprise each at least two fiber-reinforced U-shaped plies, respectively at least two fiber-reinforced inverted U-shaped plies, namely a first ply and a second ply. Advantageously, the two fiber-reinforced U-shaped plies, respectively the two fiber-reinforced inverted U-shaped plies, may be directly superimposed. The first plies and the second plies comprise the structural fibers 40 of the lower part 50 and of the upper part 60. Advantageously, the structural fibers 40 are arranged so that the orientation of the structural fibers 40 of the first ply differs from the orientation of the structural fibers 40 of the second ply. In particular, the orientation of the structural fibers 40 of the first ply can be substantially perpendicular to the orientation of the structural fibers 40 of the second ply. Moreover, the orientation of the structural fibers 40 of the first ply and/or the orientation of the structural fibers 40 of the second ply can be chosen among substantially 0°, ±30° ±45° or 90° relative to the thickness direction of the composite honeycomb 1. For example and by defining by γ the orientation of the structural fibers 40 of the first ply of the lower part 50, by δ the one of the second ply of the lower part 50, by ε the orientation of the one of the first ply of the upper part 60 and by ζ the one of the second ply of the upper part 60, one can have the following combination of structural fibers orientations: [γ,δ,ε,ζ]= [+45°,-45°,-45°,+45°] or [+45°,-45°,+45°,-45°] or [-45°,+45°,-45°,+45°] or [0°,+90°,-90°,0°] or [+90°,0°,0°,-90°] or [0°,+30°,-30°,0°] or [0°,-30°,+30°,0°] or [0°,+45°,-45°,0°] or [0°,+45°,-45°,0°] or [+45°,-30°,+30°,-45°] or [-45°,+30°,-30°,+45°] or [+45°,-90°,+90°,-45°] or [-45°,+90°,-90°,+45°] or [+30°,-90°,+90°,-30°] or [-30°,+90°,-90°,+30°].

As mentioned above, the composite honeycomb 1 may comprise a plurality of contiguous cells 2 each of substantially regular hexagonal cross-section. In Figure 2, said plurality of contiguous cells 2 comprises advantageously at least one central cell 70 surrounded by six peripheral cells, namely a lower 71, a lower left 72, a lower right 73, an upper 74, an upper left 75 and an upper right 76 peripheral cell, said central cell 70 and said peripheral cells 70,71,72,73,74,75,76 being interconnected and forming together a cell group 80. The cells 70,71,72,73,74,75,76 comprise each a lower and upper parts as defined above and comprising structural fibers providing, as defined above, continuity of fiber-reinforced material between horizontal cell walls and respective inclined cell walls. Therefore, the cells 70,71,72,73,74,75,76 may advantageously be arranged in such a manner that two continuities of fiber-reinforced material is provided in each corner of the central cell 70. In Figure 2, the central cell is connected to the six peripheral cells. The lower 71, respectively upper 74, peripheral cell is connected to the lower left 72 and to the lower right 73, respectively upper left 75 and upper right 76, peripheral cells. The lower left 72, respectively lower right 73, peripheral cell is connected to the upper left 75, respectively upper right 76, peripheral cell. In the cell group 80, one of the two lower inclined cell walls 52 of the central cell 70 comprises one inclined side 8' of the inverted U-shaped ply 91' of the lower left peripheral cell 72 and the other lower inclined cell wall 52 of the central cell 70 comprises one inclined side 8' of the inverted U-shaped ply 91' of the lower right peripheral cell 73, so that stress and strain applied to the composite honeycomb 1 can be transmitted from the lower horizontal cell wall 51 of the central cell 70 to the upper horizontal cell wall 61 of the lower left peripheral cell 72, respectively to the upper horizontal cell wall 61 of the lower right peripheral cell 73, through one of the upper inclined cell walls 62 of the lower left peripheral cell 72, respectively through one of the upper inclined cell walls 62 of the lower right peripheral cell 73. Similarly, one of the two upper inclined cell walls 62 of the central cell 70 comprises one inclined side 8' of the U-shaped ply 91 of the upper left peripheral cell 75 and the other upper inclined cell wall 62 of the central cell 70 comprises one inclined side 8' of the U-shaped ply 91 of the upper right peripheral cell 76, so that stress and strain applied to the composite honeycomb 1 can be transmitted from the upper horizontal cell wall 61 of the central cell 70 to the lower horizontal cell wall 51 of the upper left peripheral cell 75, respectively to the lower horizontal cell wall 51 of the upper right peripheral cell 76, through one of the lower inclined cell walls 52 of the upper left peripheral cell 75, respectively through one of the lower inclined cell walls 52 of the upper right peripheral cell 76. Therefore and in the cell group 80, two continuities of fiber-reinforced material are provided in each corner of the central cell 70 of the honeycomb 1. Moreover, each wall of said central cell comprise a portion of U-shaped ply 91 and a portion of inverted U-shaped ply 91' so that each wall comprises two plies.

Advantageously, the composite honeycomb 1 comprises a plurality of cell groups 80,80',80". Advantageously, the composite honeycomb 1 comprises a plurality of cells groups uniformly distributed along a vertical axis. For instance, Figure 2 shows a cell group 80 and a cell group 80' distributed along said vertical axis. In this case, the upper peripheral cell 74 of the cell group 80 corresponds to the central cell 70' of the contiguous cell group 80'. Similarly, the lower peripheral cell 71 of the cell group 80' corresponds to the central cell 70 of the contiguous cell group 80. More advantageously, the composite honeycomb 1 comprises a plurality of cell group uniformly distributed along a horizontal axis. For instance, Figure 2 shows a cell group 80 and a cell group 80" distributed along said horizontal axis. In this case, the lower right 73, respectively the upper right 76, peripheral cell of the cell group 80 corresponds to the lower left 72", respectively upper left 75" of the contiguous cell group 80".

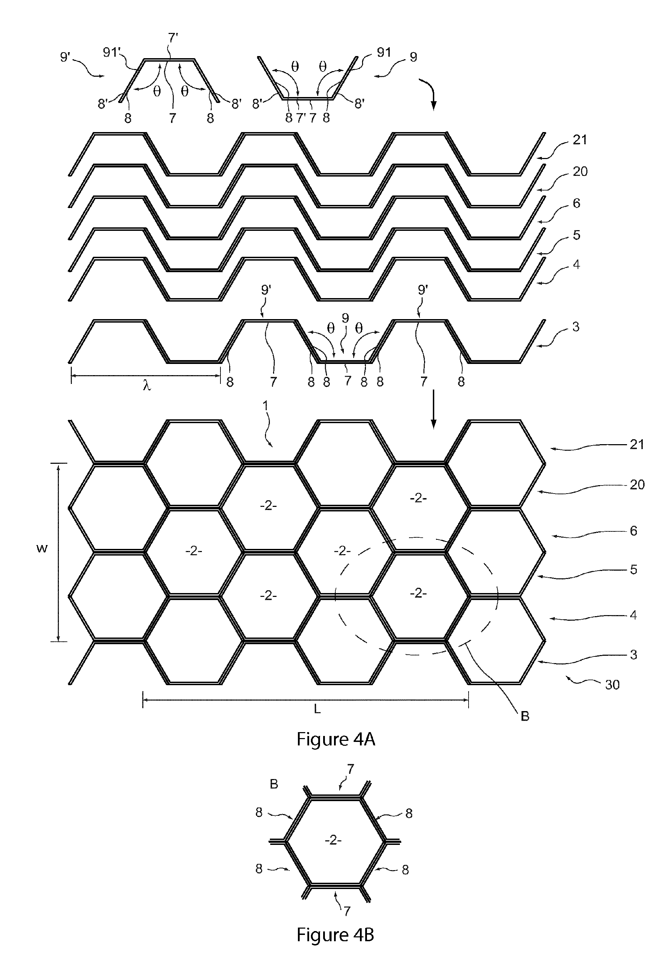

By way of example, a method of producing the composite honeycomb 1 object of the invention is described hereinafter with reference to the appended Figures 4 to 9.

Figure 4A depicts a schematic representation of a method of producing a composite honeycomb 1, in a first embodiment. The produced composite honeycomb 1 is formed of a plurality of honeycomb cells 2 each of substantially hexagonal cross-section. Moreover, each wall of said honeycomb cells are of substantially the same thickness, see Figure 4B. Advantageously, the composite honeycomb 1 is formed of a plurality of honeycomb cells 2 each of substantially regular hexagonal cross-section. The first step of the method, object of the invention, consists essentially of producing at least four corrugated sheets 3,4,5,6 by interconnecting a plurality of fiber-reinforced substantially U-shaped elements 9 with fiber-reinforced substantially inverted U-shaped elements 9'. In Figure 4A, six corrugated sheets are produced, namely a first 3, a second 4, a third 5 and a fourth 6 corrugated sheet as well as two subsequent corrugated sheets 20,21. The U-shaped elements 9, the inverted U-shaped elements 9', the corrugated composite sheets 3,4,5,6,20,21 and the honeycomb 1 are shown in Figure 4A in cross-section. The U-shaped elements 9 comprise each a horizontal side 7 and two inclined sides 8. Advantageously, the inverted U-shaped elements 9' can be substantially symmetrical in shape to the U-shaped elements 9, the horizontal side 7 and the inclined sides 8 can be substantially of same dimensions and the inclined sides 8 can be inclined at substantially 120° relative to the horizontal side 7 so that the produced composite honeycomb 1 is formed of a plurality of cells 2 each of substantially regular hexagonal cross-section. The plurality of U-shaped elements 9 are interconnected with inverted U-shaped elements 9' so that each inclined side 8 of each U-shaped element 9 is brought into contact and bonded with one inclined side 8 of one of the inverted U-shaped elements 9'. By this way, the U-shaped elements 9 and the inverted U-shaped elements 9' are bonded together so that each corrugated sheet 3,4,5,6,20,21 is shaped in cross-section in a substantially periodic trapezoidal waveform defining in cross-section the outline of half of adjacent hexagonal honeycomb cells 2 of the composite honeycomb 1. Advantageously, each corrugated sheet 3,4,5,6,20,21 can be shaped in cross-section in a substantially periodic regular trapezoidal waveform defining in cross-section the outline of half of adjacent regular hexagonal honeycomb cells 2 of the composite honeycomb 1 when the horizontal side 7 and the inclined sides 8 of the U-shaped elements 9 are substantially of same dimensions, when the inclined sides 8 are inclined at substantially 120° relative to the horizontal side 7 and when the inverted U-shaped elements 9' are substantially symmetrical in shape to the U-shaped elements 9. Advantageously and since the inclined side 8 of U-shaped elements 9 are brought into contact and bonded with inclined sides 8 of inverted U-shaped elements 9', the bonding between the U-shaped elements and the inverted U-shaped elements is reliable. The elements are not likely to be disconnected since the stress and strain applied to the composite honeycomb 1 and therefore to the corrugated sheets 3,4,5,6,20,21 are transmitted from one element to the other through sides 8 of elements 9,9', not through an end. The number of interconnected U-shaped elements 9 and inverted U-shaped elements 9' depends on the desired length L of the composite honeycomb 1. Moreover and since the inclined side 8 of U-shaped elements 9 are brought into contact and bonded with inclined sides 8 of inverted U-shaped elements 9', each corrugated sheet 3,4,5,6,20,21 comprises inclined sides 8 of double thickness and horizontal side 7 of single thickness. Since horizontal sides 7 of corrugated sheets 3,4,5,6,20,21 are intended to be brought into contact so as to form a corrugated sheets stack 30 (see below), the cell walls of the corrugated sheets stack 30 are all of the same thickness, each being of double thickness.

The U-shaped elements 9 and the inverted U-shaped elements 9' comprise each fiber-reinforced material comprising a plurality of structural fibers 40, said structural fibers 40 being intended to bear stress and strain applied to the composite honeycomb. Advantageously, the U-shaped elements 9, respectively the inverted U-shaped elements 9', may comprise at least one fiber-reinforced U-shaped ply 91, respectively at least one fiber-reinforced inverted U-shaped ply 91', which comprises the structural fibers 40 of the U-shaped elements 9, respectively of the inverted U-shaped elements 9'. For example, Figure 9 depicts a schematic representation in perspective of a fiber-reinforced U-shaped ply 91. The U-shaped plies 91 and the inverted U-shaped ply 91' comprise each a horizontal side 7' and two inclined sides 8'. Advantageously, the plurality of structural fibers 40 may be arranged to provide a continuity of fiber-reinforced material between the horizontal side 7' and the two inclined sides 8' of the U-shaped ply 91, respectively of the inverted U-shaped ply 91', so that stress and strain applied to the composite honeycomb can be transmitted from the horizontal side 7' to the inclined sides 8'. Moreover, the structural fibers 40 may advantageously be arranged to lie essentially in a unidirectional orientation for bearing stress and strain in said orientation.

Advantageously, each U-shaped element 9 and each inverted U-shaped element 9' may comprise a plurality of fiber-reinforced plies. For example, said U-shaped elements 9, respectively said inverted U-shaped elements 9', can comprise each at least two fiber-reinforced U-shaped plies, respectively at least two fiber-reinforced inverted U-shaped plies, namely a first ply and a second ply. Advantageously, the two fiber-reinforced U-shaped plies, respectively the two fiber-reinforced inverted U-shaped plies, may be directly superimposed. The first plies and the second plies comprise the structural fibers 40 of the U-shaped elements 9 and of the inverted U-shaped elements 9'. Advantageously, the structural fibers 40 are arranged so that the orientation of the structural fibers 40 of the first ply differs from the orientation of the structural fibers 40 of the second ply.

Subsequently of producing the corrugated sheets 3,4,5,6,20,21, the method object of the invention comprises the step of stacking the first 3, the second 4, the third 5 and the fourth 6 corrugated sheets upon each other so as to form a corrugated sheets stack 30 and so as to obtain a plurality of substantially hexagonal honeycomb cells 2 by bringing into contact horizontal sides 7 of adjacent corrugated sheets 3,4,5,6. In Figure 4A, the second corrugated sheet 4 is directly staked on the first one 3, the third one 5 is directly staked on the second one 4, and the fourth one 6 is directly stacked on the third one 5. Moreover and in this particular embodiment of the invention, horizontal sides 7 of U-shaped elements 9 of the corrugated sheets 3,4,5,6 are brought into contact with horizontal sides 7 of U-shaped elements 9 of adjacent corrugated sheet 3,4,5,6. Consequently, the horizontal sides 7 of inverted U-shaped elements 9' of the corrugated sheets 3,4,5,6 are brought into contact with horizontal sides 7 of inverted U-shaped elements 9' of adjacent corrugated sheet 3,4,5,6. Actually, the adjacent corrugated sheets 3,4,5,6 are turned over from each other. In Figure 4A, the second corrugated sheet 4 and the fourth one 6 are turned over from the first corrugated sheet 3 or from the third one 5.

Subsequently and advantageously, the method object of the invention comprise the step of stacking subsequent corrugated sheets 20,21 upon the corrugated sheets stack 30 in a similar way as the first 3, second 4, third 5 and fourth 6 corrugated sheets has been stacked upon each other. The number of subsequent corrugated sheets is chosen in function of the desired width w of the composite honeycomb 1. In Figure 4A, two subsequent corrugated sheets 20,21 are stacked upon the corrugated sheets stack 30.

The method object of the invention comprises the step of bonding the horizontal sides 7 of corrugated sheets 3,4,5,6,20,21 brought into contact so as to obtain the composite honeycomb 1. The horizontal sides 7 of corrugated sheets 3,4,5,6,20,21 brought into contact can be bonded either concomitantly as a whole or sequentially in pairs as one of the corrugated sheets 3,4,5,6,20,21 is stacked upon an other one. In order to bond the horizontal sides 7 of corrugated sheets 3,4,5,6,20,21 brought into contact concomitantly as a whole, the corrugated sheets stack 30 is heat-hardened. Alternatively, the horizontal sides 7 of corrugated sheets 3,4,5,6,20,21 brought into contact are bonded sequentially in pairs as one of the corrugated sheets 3,4,5,6,20,21 is stacked upon an other one by gluing the horizontal sides 7 brought into contact. Since horizontal sides of adjacent corrugated sheets are brought into contact, the bonding between adjacent corrugated sheets is reliable. Adjacent corrugated sheets are not likely to be disconnected since the stress and strain applied to the honeycomb are transmitted from one honeycomb cell to the other through sides of adjacent corrugated sheets, not through an end.

Advantageously, the composite honeycomb 1 may be isotropic since it may be formed of a plurality of honeycomb cells 2 each of substantially regular hexagonal cross-section and with all walls of said honeycomb cells of substantially the same thickness, see Figure 4B. By considering that material properties of each cell wall is uniform and by neglecting the non-uniformity in mechanical properties due to the particular geometry of each cell, the uniformity in walls thickness makes the composite honeycomb 1 isotropic, meaning mechanical properties uniform in all directions.

Advantageously, parts of the assembled corrugated sheets 3,4,5,6,20,21 can be cut so as to keep the honeycomb cells 2, which walls are of substantially the same thickness.

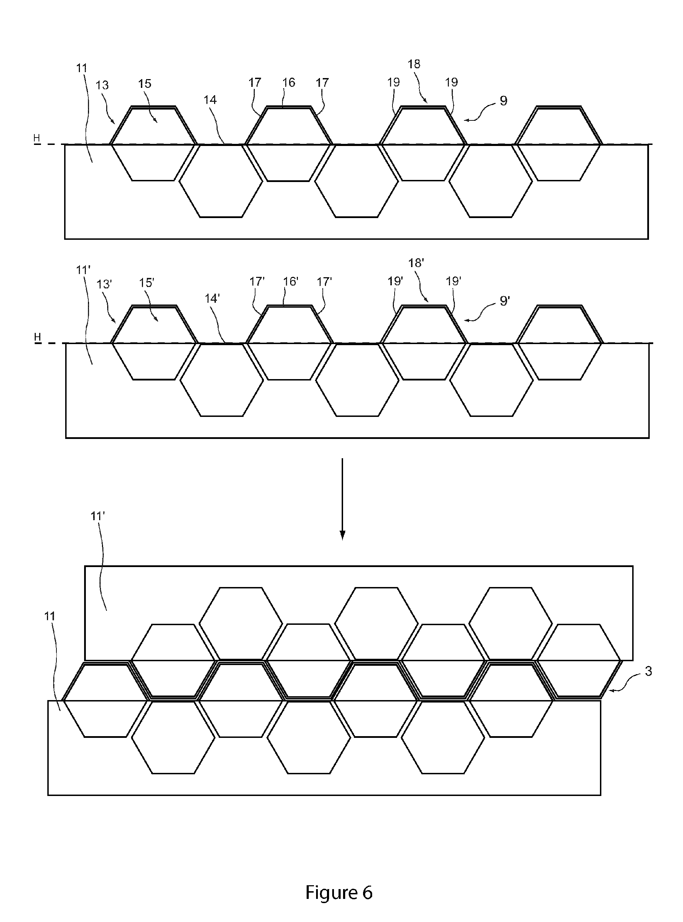

Figure 6 depicts a schematic representation of a method of producing corrugated sheets 3,4,5,6,20,21. The method comprise the step of preparing a pair of mating molds, namely a first mold 11 and a second mold 11', comprising each a molding surface 13,13' provided with flat sides 14,14' arranged in a horizontal plane H and with a plurality of uniformly distributed substantially trapezoid profiles 15,15' projecting with respect to the horizontal plane H. The trapezoid profiles 15,15' comprise each a horizontal base 16,16' projecting with respect to the horizontal plane H and inclined legs 17,17' linking the horizontal base 16 to adjacent flat sides 14,14'. In Figure 6, the molding surface 13 of the first mold 11 is substantially identical to the molding surface 13' of the second mold 11'. Moreover, the trapezoid profiles 15,15' are substantially isosceles, said inclined legs 17,17' being inclined at substantially 120° relative to the horizontal base 16,16' and being of substantially same dimensions as the horizontal bases 16,16'. Moreover, the horizontal bases 16,16' are substantially of same dimensions as the flat sides 14,14'. Isosceles trapezoid profiles 15,15' and horizontal bases 16,16' substantially of same dimensions as the flat sides 14,14' can advantageously lead to the production of a composite honeycomb 1 formed of a plurality of cells 2 each of substantially regular hexagonal cross-section since each corrugated sheet 3,4,5,6,20,21 is shaped in cross-section in a substantially periodic regular trapezoidal waveform defining in cross-section the outline of half of adjacent regular hexagonal honeycomb cells 2 of the composite honeycomb 1.

The method provide the step of forming the U-shaped elements 9 by covering each trapezoid profile 15 of the first mold 11 with a portion of a first fiber-reinforced prepreg ply 18 comprising the structural fibers 40 of the U-shaped elements 9, wherein each portion of first fiber-reinforced prepreg ply 18 covers the horizontal base 16 and the inclined legs 17 of one trapezoid profile 15 of the first mold 11. Similarly, the method provide the step of forming the inverted U-shaped elements 9' by covering each trapezoid profile 15' of the second mold 11' with a portion of a second fiber-reinforced prepreg ply 18' comprising the structural fibers 40 of the inverted U-shaped elements 9', wherein each portion of second fiber-reinforced prepreg ply 18' covers the horizontal base 16' and the inclined legs 17' of one trapezoid profile 15' of the second mold 11'. Once heat-hardened, the portions of first fiber-reinforced prepreg ply 18 and the portions of second fiber-reinforced prepreg ply 18' will become the U-shaped ply 91 and the inverted U-shaped ply 91' respectively. For example, Figure 8 depicts a schematic representation of a first fiber-reinforced prepreg ply 18. The first fiber-reinforced prepreg ply 18 and the second fiber-reinforced prepreg ply 18' comprise each at least one fiber-reinforced ply comprising the structural fibers 40. Advantageously, the first fiber-reinforced prepreg ply 18 and the second fiber-reinforced prepreg ply 18' can comprise a plurality of plies comprising the structural fibers 40.

Subsequently, the method comprise the step of interconnecting a plurality of U-shaped elements 9 with inverted U-shaped elements 9' by assembling the pair of mating molds so that sides 19 of the portions of first fiber-reinforced prepreg ply 18 covering the inclined legs 17 of the trapezoid profiles 15 of the first mold 11 are brought into contact with corresponding sides 19' of the portions of second fiber-reinforced prepreg ply 18' covering the inclined legs 17' of the trapezoid profiles 15' of the second mold 11'. Preferably, the pair of mating mold is assembled by turning over from each other the first mold 11 and the second mold 11'.

Subsequently, the method comprise the step of heat-hardening said portions of first and second fiber-reinforced prepreg plies 18,18' so as to bond said sides 19 of portions of first fiber-reinforced prepreg ply 18 with corresponding sides 19' of portions of second fiber-reinforced prepreg ply 18' and so as to obtain the first corrugated sheet 3. The interconnected U-shaped elements 9 and inverted U-shaped elements 9' are therefore bonded. Such bonding is reliable since the stress and strain applied to the honeycomb and therefore to the corrugated sheet are transmitted from one ply to the other through sides of elements 9,9', not through ends.

Subsequently, the method comprise the step of repeating the previous steps so as to obtain the second 4, third 5 and fourth 6 corrugated sheets as well as eventually the subsequent corrugated sheets 20,21.

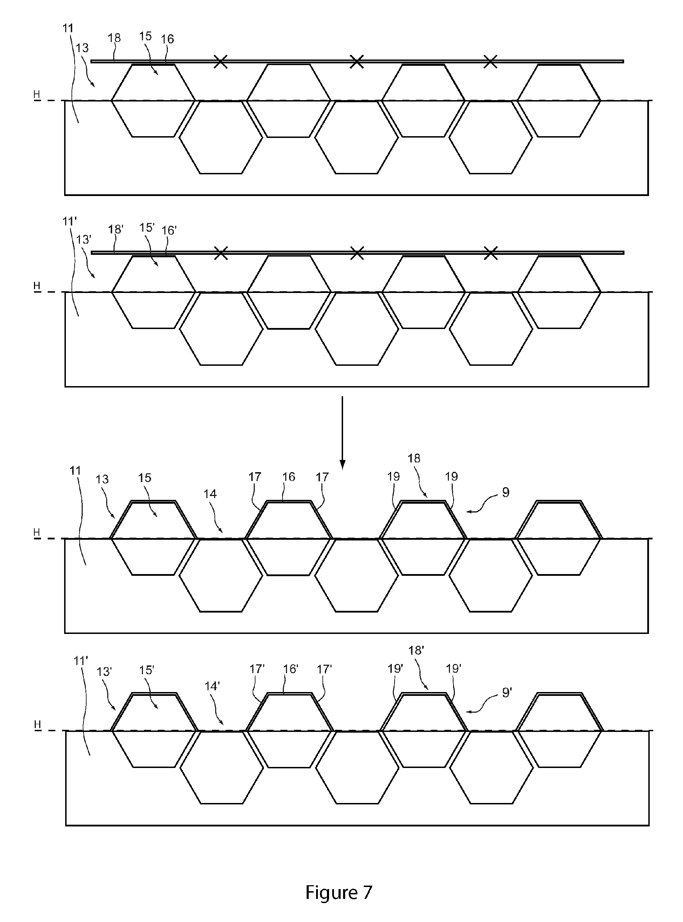

Figure 7 depicts a schematic representation of a method of forming U-shaped elements 9 and inverted U-shaped elements 9' by covering a molding surface with a fiber-reinforced prepreg ply, in accordance with the invention. In particular, the following method allows to cover each isosceles trapezoid profile 15,15' of the first mold 11, respectively second mold 11', with a portion of first fiber-reinforced prepreg ply 18, respectively second fiber-reinforced prepreg ply 18, effectively. The method comprises the step of positioning a first fiber-reinforced prepreg ply 18, respectively second fiber-reinforced prepreg ply 18', upon the molding surface 13,13' of the first mold 11, respectively second mold 11'. Advantageously, the first fiber-reinforced prepreg ply 18, respectively second fiber-reinforced prepreg ply 18', is tightened and maintained above the molding surface 13,13'. Subsequently, the method comprise the step of cutting the first fiber-reinforced prepreg ply 18, respectively second fiber-reinforced prepreg ply 18', so that said portions of first fiber-reinforced prepreg ply 18, respectively second fiber-reinforced prepreg ply 18', are generated. The first fiber-reinforced prepreg ply 18, respectively second fiber-reinforced prepreg ply 18' are cut at every point corresponding to the middle distance between two adjacent isosceles trapezoid profiles 15,15' of the first mold 11, respectively second mold 11'. Because the trapezoid profiles 15,15' are isosceles and because the horizontal bases 16,16' are substantially of same dimensions as the flat sides 14,14', said portions of first fiber-reinforced prepreg ply 18, respectively second fiber-reinforced prepreg ply 18', cover each isosceles trapezoid profile 15,15' of the first mold 11, respectively second mold 11'. Advantageously, the first fiber-reinforced prepreg ply 18, respectively second fiber-reinforced prepreg ply 18', is cut by laser-cutting.

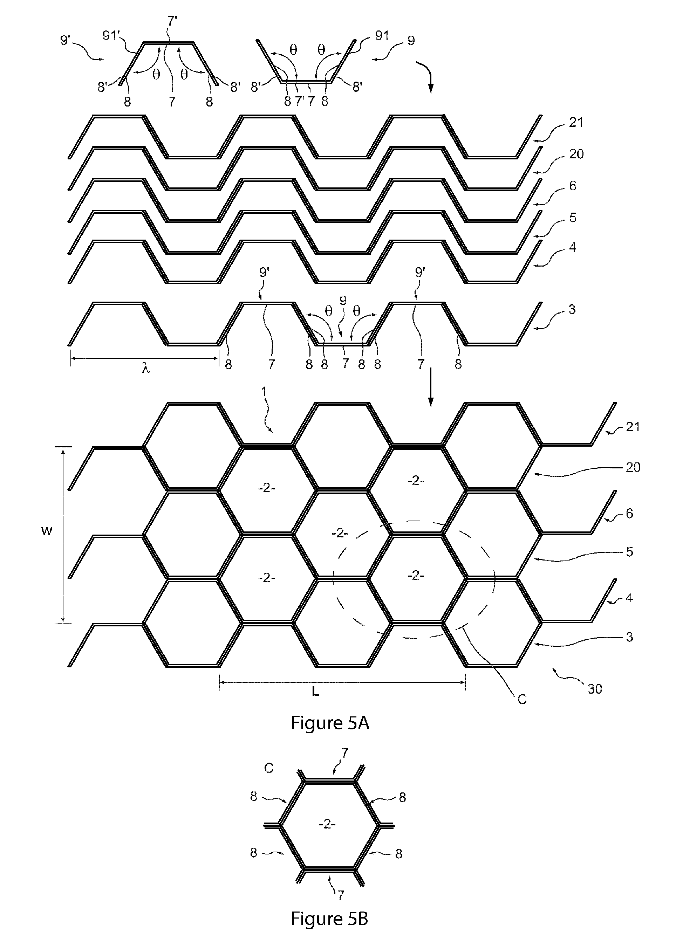

Figure 5A depicts a schematic representation of a method of producing a composite honeycomb 1, in accordance with the invention in a second embodiment. The same steps and elements as in Figure 4A appear in Figure 5A which means that it is not necessary to describe them in detail again. For such steps and elements, one refers to the description of Figure 4A. Similarly, Figure 5B is a detailed view of the composite honeycomb of Figure 5A and the same elements as in Figure 4B appear in Figure 5B which means that it is not necessary to describe them in detail again. In this second embodiment of the invention, horizontal sides 7 of U-shaped elements 9 of the corrugated sheets 3,4,5,6,20,21 are brought into contact with horizontal sides 7 of inverted U-shaped elements 9' of adjacent corrugated sheet 3,4,5,6,20,21. Advantageously, the corrugated sheets 3,4,5,6,20,21 are shaped in a waveform with a determined wavelength λ and the adjacent corrugated sheets 3,4,5,6,20,21 are displaced from each other of substantially one-half of the determined wavelength λ. In Figure 5A, the second corrugated sheet 4, the fourth corrugated sheet 6 and the subsequent corrugated sheet 21 are displaced in a first direction of substantially one-half of the determined wavelength λ from the first corrugated sheet 3 or from the third corrugated sheet 5 or from the subsequent corrugated sheet 20.

In the above methods of producing corrugated sheets 3,4,5,6,20,21 referring to Figure 6 and to Figure 7, the first fiber-reinforced prepreg ply 18 and the second fiber-reinforced prepreg ply 18' comprise at least one fiber-reinforced prepreg ply comprising the structural fibers 40. Advantageously, the first fiber-reinforced prepreg ply 18 and the second fiber-reinforced prepreg ply 18' can comprise at least two plies comprising the structural fibers 40. Moreover, the first fiber-reinforced prepreg ply 18 and the second fiber-reinforced prepreg ply 18' can be identical or different, in particular in terms of structural fibers orientation. One of the advantages of the method object of the invention comes from the fact that the pair of mating mold is assembled by turning over from each other the first mold 11 and the second mold 11'. Consequently and by considering that the first and second fiber-reinforced prepreg plies 18,18' are identical, in particular in terms of structural fibers orientation α, each cells wall of the produced honeycomb 1 comprises a portion of the first fiber-reinforced prepreg ply 18 with structural fibers orientation α and a portion of the second fiber-reinforced prepreg ply 18' with structural fibers orientation -α due to the fact that the second fiber-reinforced prepreg plies 18' has been turned over from the first one 18. Producing a composite honeycomb is therefore less costly, less time consuming and less laborious than known method because it is not necessary to produced two different kinds of plies for producing a composite honeycomb 1 wherein each cell wall comprises two plies comprising opposite structural fibers orientation.

Generally speaking and considering the above descriptions of methods of producing a composite honeycomb 1 with reference to the Figures 4 to 9, the first fiber-reinforced prepreg ply 18 in Figures 8 and 7 may be subjected to become a portions of first fiber-reinforced prepreg ply 18 in Figure 6 which may be subjected to become a U-shaped ply 91 in Figure 9 which may be subjected to be comprised in a U-shaped element 9 in Figures 4 and 5.

## Claims

1. A composite honeycomb (1) comprising a plurality of contiguous cells (2) each of substantially hexagonal cross-section,
- each cell (2) comprising a lower part (50) and an upper part (60), said lower part (50) comprising three lower cell walls, namely a lower horizontal cell wall (51) and two lower inclined cell walls (52), and said upper part (60) comprising three upper cell walls, namely an upper horizontal cell wall (61) and two upper inclined cell walls (62),
**characterized**
- **in that** each of said cell walls (51,52,61,62) are substantially of the same thickness,
- **in that** each lower part (50) comprises fiber-reinforced material including a plurality of structural fibers (40) arranged to provide a continuity of fiber-reinforced material between said lower horizontal cell wall (51) and said two lower inclined cell walls (52) of said lower part (50)
- **and in that** each upper part (60) comprises fiber-reinforced material including a plurality of structural fibers (40) arranged to provide a continuity of fiber-reinforced material between said upper horizontal cell wall (61) and said two upper inclined cell walls (62) of said upper part (60),
- **so that** stress and strain applied to said composite honeycomb (1) can be transmitted from said horizontal cell walls (51,61) to respective inclined cell walls (52,62).

2. The composite honeycomb according to the preceding claim, **characterized in that** said cells (2) are each of substantially regular hexagonal cross-section, said horizontal cell wall (51,61) and said inclined cell walls (52,62) being substantially of same dimensions and said inclined cell walls (52,62) being inclined at substantially 120° relative to said horizontal cell wall (51,61).

3. The composite honeycomb according to any one of the preceding claims, **characterized**
- **in that** each lower part (50) comprises at least one U-shaped ply (91) comprising a horizontal side (7') and two inclined sides (8'), said U-shaped ply (91) comprising said fiber-reinforced material including a plurality of structural fibers (40) arranged to provide a continuity of fiber-reinforced material between said lower horizontal cell wall (51) and said two lower inclined cell walls (52) of said lower part (50)
- and **in that** each upper part (60) comprises at least one inverted U-shaped ply (91') comprising a horizontal side (7') and two inclined sides (8'), said inverted U-shaped ply (91') comprising said fiber-reinforced material including a plurality of structural fibers (40) arranged to provide a continuity of fiber-reinforced material between said upper horizontal cell wall (61) and said two upper inclined cell walls (62) of said upper part (60).

4. The composite honeycomb according to the preceding claim, **characterized in that** said inverted U-shaped ply (91') is substantially symmetrical in shape to said U-shaped ply (91).

5. The composite honeycomb according to any one of the preceding claims, **characterized in that** said structural fibers (40) are arranged to lie essentially in a unidirectional orientation.

6. The composite honeycomb according to any one of claims 3 to 5, **characterized in that** said structural fibers (40) are arranged so that the orientation of the structural fibers (40) of said U-shaped ply (91) differs from the orientation of the structural fibers (40) of said inverted U-shaped ply (91').

7. The composite honeycomb according to any one of claims 3 to 6, **characterized in that** said structural fibers (40) are arranged so that the orientation of the structural fibers (40) of said U-shaped ply (91) is substantially perpendicular to the orientation of the structural fibers (40) of said inverted U-shaped ply (91').

8. The composite honeycomb according to any one of the preceding claims, **characterized in that** said lower part (50), respectively said upper part (60), comprises each at least two fiber-reinforced U-shaped plies, respectively at least two fiber-reinforced inverted U-shaped plies, namely a first ply and a second ply, comprising said structural fibers (40) and **in that** said structural fibers (40) are arranged so that the orientation of the structural fibers (40) of said first ply differs from the orientation of the structural fibers (40) of said second ply.

9. The composite honeycomb according to the preceding claim, **characterized in that** said structural fibers (40) are arranged so that the orientation of the structural fibers (40) of said first ply is substantially perpendicular to the orientation of the structural fibers (40) of said second ply.

10. The composite honeycomb according to any one of the preceding claims, **characterized in that** said structural fibers (40) are chosen among carbon, glass, aramid, ceramic, quartz, thermoplastic polyethylene (UHMWPE) and polybenzoxazole (PBO).

11. The composite honeycomb according to any one of claims 3 to 10, **characterized in that** said structural fibers (40) are chosen and arranged so that the thickness of each U-shaped ply (91), respectively of each inverted U-shaped ply (91'), is comprised between 15 and 100 µm.

12. The composite honeycomb according to any one of the preceding claims, **characterized in that** the diameter of said structural fibers (40) are comprised between 5 and 11 µm.

13. The composite honeycomb according to any one of claims 3 to 12, **characterized in that** the relative weight of each U-shaped ply (91), respectively of each inverted U-shaped ply (91'), is as low as 15 g/m².

14. The composite honeycomb according to any one of the preceding claims, **characterized in that** said plurality of contiguous cells (2) comprises at least one central cell (70) surrounded by six peripheral cells, namely a lower (71), a lower left (72), a lower right (73), an upper (74), an upper left (75) and an upper right (76) peripheral cell, said central cell (70) and said peripheral cells (71,72,73,74,75,76) being interconnected, forming together a cell group (80) and being arranged in such a manner that two continuities of fiber-reinforced material is provided in each corner of the central cell (70).

15. The composite honeycomb according to the preceding claim when dependent of claim 3 or 8, **characterized in that** each wall of said central cell (70) comprise a portion of U-shaped ply (91) and a portion of inverted U-shaped ply (91') so that each wall of said central cell comprises at least two plies.

16. The composite honeycomb according to any one of claims 14 to 15 when dependent to claim 3 or 8, **characterized**
- **in that** one of said two lower inclined cell walls (52) of said central cell (70) comprises one inclined side (8') of the inverted U-shaped ply (91') of said lower left peripheral cell (72) and the other lower inclined cell wall (52) of said central cell (70) comprises one inclined side (8') of the inverted U-shaped ply (91') of said lower right peripheral cell (73)
- and **in that** one of said two upper inclined cell walls (62) of said central cell (70) comprises one inclined side (8') of the U-shaped ply (91) of said upper left peripheral cell (75) and the other upper inclined cell wall (62) of said central cell (70) comprises one inclined side (8') of the U-shaped ply (91) of said upper right peripheral cell (76),
- so that stress and strain applied to said composite honeycomb (1) can be transmitted from said lower horizontal cell wall (51) of the central cell (70) to said upper horizontal cell wall (61) of said lower left peripheral cell (72), respectively to said upper horizontal cell wall (61) of said lower right peripheral cell (73), through one of said upper inclined cell walls (62) of said lower left peripheral cell (72), respectively through one of said upper inclined cell walls (62) of said lower right peripheral cell (73)
- and so that stress and strain applied to said composite honeycomb (1) can be transmitted from said upper horizontal cell walls (61) of the central cell (7) to said lower horizontal cell wall (51) of said upper left peripheral cell (75), respectively to said lower horizontal cell wall (51) of said upper right peripheral cell (76), through one of said lower inclined cell walls (52) of said upper left peripheral cell (75), respectively through one of said lower inclined cell walls (52) of said upper right peripheral cell (76).

17. The composite honeycomb according to any one of claims 14 to 16, **characterized**
- **in that** said composite honeycomb comprises a plurality of cells groups (80,80') uniformly distributed along a vertical axis
- and **in that** the upper (74,74'), respectively lower (71,71'), peripheral cell of each cell group (80,80') corresponds to the central cell (70,70') of a contiguous cell group (80,80').

18. The composite honeycomb according to any one of claims 14 to 17, **characterized**
- **in that** said composite honeycomb comprises a plurality of cell group (80,80") uniformly distributed along a horizontal axis,
- **in that** the lower right (73,73"), respectively lower left (72,72"), peripheral cell of each cell group (80,80") corresponds to the lower left (72,72"), respectively lower right (73,73"), peripheral cell of a contiguous cell group (80,80"),
- and **in that** the upper right (76,76"), respectively upper left (75,75"), peripheral cell of each cell group (80,80") corresponds to the upper left (75,75"), respectively upper right (76,76"), peripheral cell of a contiguous cell group (80,80").
